# DEMANDE DE BREVET EUROPEEN

(11) **EP 1 650 846 A1**
(43) Date de publication de la demande: **26.04.2006**
(21) Numéro de dépôt: 05292133.5
(22) Date de dépôt: 12.10.2005
(51) Int. Cl.: H02J 1/14

(54) **Réseau de distribution de puissance pour un véhicule**

(30) Priorité: 20.10.2004 FR 0411165
(71) Demandeur: MESSIER BUGATTI, 78140 Velizy Villacoublay (FR)
(72) Inventeur: Lamarque, Jean-Louis, 75015 Paris (FR)
(74) Mandataire: Habasque, Etienne J. Jean-François

(57) **Abrégé**

Le réseau (10) de distribution de puissance électrique pour un véhicule comporte :
- des postes (20A, 20B, 20C, 20D) de connexion au réseau propre chacun à fournir de la puissance à un organe fonctionnel (22A, 22B, 22C, 22D) ;
- une ligne d'alimentation (16) ; et
- des moyens de limitation de la puissance fournie par les postes de connexion.

Chaque poste de connexion (20A) comporte :
- des moyens d'émission d'une information représentative de la puissance (Pᵢ) fournie depuis le poste de connexion (20A) ;
- des moyens de réception depuis chaque autre poste de l'information émise représentative de la puissance (Pᵢ) fournie par ce poste ; et
- des moyens de commande de la puissance pouvant être fournie par le poste de connexion (20A) en fonction des informations reçues.

## Description

La présente invention concerne un réseau de distribution de puissance électrique pour un véhicule, du type comportant :
- des postes de connexion au réseau propre chacun à fournir de la puissance à un organe fonctionnel ;
- une ligne d'alimentation sur laquelle chaque poste de connexion est connecté pour recevoir de la puissance et ;
- des moyens de limitation de la puissance fournie par les postes de connexion en fonction des puissances fournies par les différents postes de connexion, lesquels moyens de limitation comportent des moyens de mesure de la puissance fournie depuis chaque poste de connexion.

Les véhicules de transport de passagers, tel que les avions, les trains ou les autocars sont équipés de nombreux dispositifs électriques mis à la disposition des passagers pour leur confort. En particulier, il est fréquent que les sièges des véhicules soient équipés d'actionneurs électriques pour le déplacement des différents éléments du siège, et qu'une veilleuse soit mise à disposition de chaque passager. En outre, une ou plusieurs prises permettant la connexion d'un équipement électrique personnel, tel qu'un ordinateur portable sont couramment disponibles pour chaque siège.

Ainsi, chaque organe fonctionnel disposé sur le réseau, qu'il s'agisse d'un actionneur, d'une lampe ou d'une prise est relié à une ligne d'alimentation du véhicule par l'intermédiaire d'un poste de connexion.

Dans la mesure où la quantité de puissance électrique disponible pour l'ensemble des passagers est limitée, notamment pour des raisons de sécurité, il convient de gérer la puissance pouvant être consommée depuis chaque poste de connexion.

Ainsi, il est connu de mettre en oeuvre sur le réseau, des moyens de limitation de la puissance distribuée par chaque poste de connexion en fonction de la puissance globale consommée et disponible sur le réseau.

Une telle solution est décrite par exemple dans le document EP-0 870 354 dans lequel une unité centrale de gestion de puissance est mise en oeuvre pour l'ensemble du réseau. Cette unité centrale reçoit de chaque poste de connexion une information représentative de la puissance effectivement fournie et, à partir des informations issues de chaque poste de connexion, l'unité centrale de gestion de puissance commande chaque poste de connexion pour l'autoriser ou non à fournir de la puissance supplémentaire.

Le réseau décrit dans ce document est très complexe et nécessite des câblages importants entre les différentes entités.

L'invention a pour but de proposer un réseau de distribution de puissance pour un véhicule qui puisse avoir une structure très simple.

A cet effet, l'invention a pour objet un réseau de distribution de puissance du type précité, caractérisé en ce que chaque poste de connexion comporte :
- des moyens d'émission, vers les autres postes de connexion du réseau, d'une information représentative de la puissance fournie depuis le poste de connexion ;
- des moyens de réception depuis chaque autre poste du réseau, de l'information émise représentative de la puissance fournie par ce poste ; et
- des moyens de commande de la puissance pouvant être fournie par le poste de connexion en fonction des informations reçues de chaque autre poste de connexion et représentatives de la puissance fournie par chaque autre poste de connexion.

Suivant des modes particuliers de réalisation, le réseau de distribution de puissance comporte l'une ou plusieurs des caractéristiques suivantes :
- les moyens d'émission et les moyens de réception comportent des moyens de transmission d'informations par courant porteur qui sont reliés à la ligne d'alimentation pour la transmission des informations représentatives de la puissance fournie sur la ligne d'alimentation ;
- il comporte pour l'ensemble des postes de connexion, un convertisseur de courant commun dont la sortie est reliée à la ligne d'alimentation et dont l'entrée est propre à être reliée à une source de puissance ;
- il comporte une unité centrale de fixation d'une puissance maximale disponible, laquelle unité comporte des moyens d'émission vers chaque poste de connexion d'une information représentative de la puissance maximale disponible, et les moyens de commande de la puissance pouvant être fournie par chaque poste de connexion comportent des moyens pour commander la puissance pouvant être fournie par le poste de connexion en fonction de l'information représentative de la puissance maximale disponible.
- au moins certains des postes de connexion comportent des prises d'alimentation permettant la connexion d'un équipement électrique indépendant.

L'invention a également pour objet un procédé de distribution de puissance pour un véhicule comportant :
- des postes de connexion au réseau propre chacun à fournir de la puissance à un organe fonctionnel ;
- une ligne d'alimentation sur laquelle chaque poste de connexion est connecté pour recevoir de la puissance ;
   le procédé comportant :
   - une mesure de la puissance fournie depuis chaque poste de connexion, et
   - une limitation de la puissance fournie par les postes de connexion en fonction des puissances fournies par les différents postes de connexion,
   caractérisé en ce qu'il comporte :
   - une émission, depuis chaque poste de connexion vers les autres postes de connexion du réseau, d'une information représentative de la puissance fournie depuis le poste de connexion ;
   - une réception depuis chaque autre poste du réseau, de l'information émise représentative de la puissance fournie par chaque poste ; et
   - une commande de la puissance pouvant être fournie par chaque poste de connexion en fonction des informations reçues de chaque autre poste et représentatives de la puissance fournie par chaque autre poste.

L'invention sera mieux comprise à la lecture de la description qui va suivre, donnée uniquement à titre d'exemple, et faite en se référant aux dessins sur lesquels :
- la figure 1 est une vue schématique d'un réseau de distribution de puissance selon l'invention ;
- la figure 2 est une vue schématique d'un poste de connexion du réseau de la figure 1 ; et
- la figure 3 est un organigramme de l'algorithme mis en oeuvre dans chaque poste de connexion au réseau.

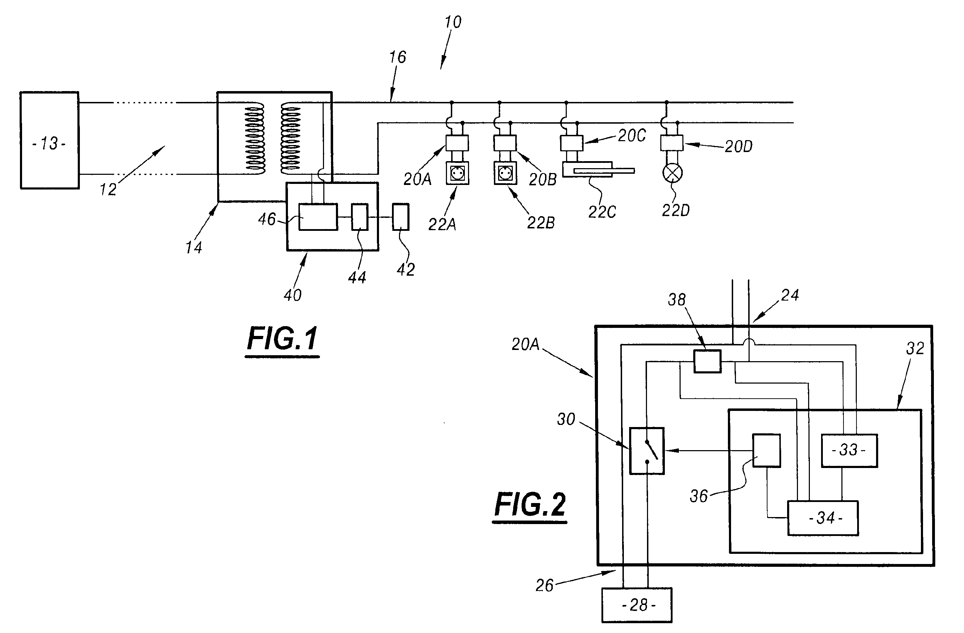

Sur la figure 1 est représenté un réseau de distribution de puissance électrique 10 selon l'invention. Ce réseau est supposé implanté dans un véhicule et notamment dans un avion.

Il comporte une entrée d'alimentation de puissance 12 connectée à une source de puissance 13 telle que par exemple les génératrices de puissance électrique prévues dans les réacteurs de l'avion. Ainsi, l'entrée de puissance 12 est propre à recevoir par exemple un courant d'une tension de 115 Volts et d'une fréquence de 400 Hertz.

En entrée du réseau, est prévu un convertisseur commun 14 propre à modifier la tension et la fréquence du courant reçues depuis l'entrée 12. Ce convertisseur 14 est propre par exemple à fournir en sortie une tension de 110 volts avec une fréquence de 60 Hertz ou encore une tension de 220 Volts avec une fréquence de 50 Hertz.

A la sortie du convertisseur 14 est reliée une ligne d'alimentation 16 formée par exemple de deux fils sur laquelle sont reliés en parallèle un ensemble de postes de connexion 20A, 20B, 20C, 20D chacun propre à alimenter un organe fonctionnel de l'avion.

Dans l'exemple considéré, les postes de connexion 20A, 20B assurent l'alimentation d'une prise d'alimentation 22A, 22B permettant la connexion d'un équipement personnel du passager tel qu'un ordinateur personnel. Le poste de connexion 20C assure l'alimentation d'un actionneur 22C alors que le poste de connexion 20D assure l'alimentation d'une lampe 22D. Les postes de connexion sont tous identiques.

Ainsi, chaque poste de connexion dont la structure est représentée plus en détails sur la figure 2 comporte une entrée 24 reliée directement à la ligne d'alimentation 16 et une sortie 26 permettant la liaison électrique d'un organe fonctionnel ou à laquelle est relié à demeure un organe fonctionnel comme dans le cas de l'actionneur 22C et de la lampe 22D.

Sur la figure 2, l'organe fonctionnel est désigné de manière générale par la référence 28 et est constitué par tout type de charge susceptible de consommer de la puissance électrique.

Chaque poste de connexion comporte entre l'entrée 24 et la sortie 26 d'alimentation de l'organe fonctionnel, des moyens 30 de limitation de la puissance fournie à l'organe fonctionnel connecté.

Suivant un premier mode de réalisation, ces moyens 30 sont constitués de moyens de commutation commandés permettant d'interrompre la fourniture de puissance à l'organe fonctionnel ou d'autoriser la fourniture de puissance depuis la ligne d'alimentation 16. Suivant un second mode de réalisation ces moyens 30 sont formés par un circuit limiteur de la puissance fournie propre à limiter par exemple la puissance fournie à valeur prédéterminée.

Avantageusement, ces moyens 30 assurent en outre une protection différentielle de la sortie 26.

Les moyens 30 sont reliés à une unité de pilotage 32 intégrée aux postes de connexion. Cette unité 32 comporte des moyens de communication 33 permettant l'émission et la réception d'informations entre le poste de connexion et les autres postes de connexion du réseau. Avantageusement, ces moyens de communication 33 sont reliés à l'aide d'un filtre adapté à la ligne d'alimentation 16 et sont propres à mettre en ceuvre un protocole de communication bidirectionnelle par courant porteur. Ainsi, les moyens 33 sont, comme connu en soi, propres à effectuer une modulation des informations transmises à une fréquence très supérieure à la fréquence du courant électrique et à envoyer ou recevoir sur la ligne d'alimentation 16 des signaux suivant le protocole prédéfini.

L'unité de pilotage 32 comporte en outre une unité de traitement d'informations 34 et une unité 36 de commande des moyens de limitation de puissance 30.

Enfin, chaque poste de connexion comporte des moyens de mesure de la puissance électrique fournie Pᵢ à l'organe fonctionnel 28 depuis le poste de connexion considéré.

Ces moyens comportent par exemple un capteur 38 de mesure de l'intensité circulant entre l'entrée 24 et la sortie 26. Ils sont reliés à l'unité de traitement d'informations 34.

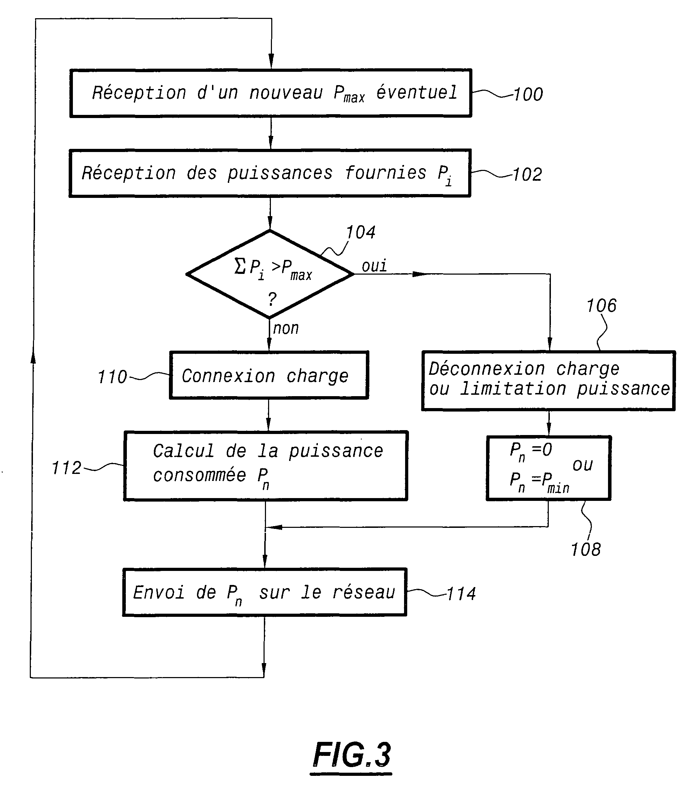

Tous les postes de connexion ont la même architecture et chaque unité de traitement d'informations 34 est propre à mettre en oeuvre l'algorithme de l'organigramme est représenté sur la figure 3.

Par ailleurs, le réseau 10 comporte une unité 40 de définition pour le réseau d'une puissance maximale disponible Pₘₐₓ. Cette unité 40 comporte une interface 42 de recueil de cette puissance maximum disponible. Cette interface est formée par exemple d'un clavier, ou d'une interface de connexion à un système central de gestion de puissance de l'avion susceptible de définir une puissance maximale allouée au réseau en cause.

L'unité 40 comporte en outre une unité de traitement d'informations 44 et une interface de communication 46 par courant porteur, laquelle interface est reliée directement par un filtre adapté à la ligne d'alimentation 16 pour l'émission vers les différents postes de connexion d'une information représentative de la puissance maximale disponible Pₘₐₓ.

Le réseau de distribution de puissance fonctionne de la manière suivante.

L'unité 40 est propre lorsque cela est nécessaire à adresser à chaque poste de distribution 20A, 20B, 20C, 20D une même valeur de puissance maximale disponible Pₘₐₓ. Cette puissance maximale disponible est par exemple égale à 15 kW pour l'ensemble du réseau.

Chaque poste de connexion met en oeuvre en continu et en boucle l'algorithme de la figure 3. A l'étape 100, en cas de réception depuis l'unité 40 d'une nouvelle puissance maximale disponible Pₘₐₓ, l'unité de traitement d'informations 34 de chaque poste mémorise cette information.

Par ailleurs, l'ensemble des postes de connexion envoie périodiquement sur le réseau depuis leur interface 33, une information représentative de la puissance fournie à l'organe fonctionnel relié au poste de connexion.

Ainsi, à l'étape 102, le poste de connexion considéré reçoit et mémorise l'ensemble des puissances fournies Pᵢ par chacun des autres postes de connexion.

A l'étape 104, l'unité de traitement d'informations 34 compare la somme des puissances fournies par l'ensemble des autres postes de connexion à la puissance maximale disponible Pₘₐₓ.

Si la somme des puissances fournies est supérieure à la puissance Pₘₐₓ, les moyens de commande 36 agissent sur les moyens de limitation de la puissance 30 afin que ceux-ci cessent l'alimentation de l'organe fonctionnel relié au poste de connexion considéré ou limitent la puissance fournie à cet organe fonctionnel à l'étape 106 suivant le mode de réalisation considéré.

A l'étape 108, une nouvelle puissance fournie Pₙ depuis le poste de connexion en cause est calculée. Celle-ci est égale à 0 si la déconnexion de l'organe fonctionnel a été commandée ou celle-ci est égale à la puissance prédéterminée Pₘᵢₙ autorisée imposée par les moyens de limitation de puissance 30.

En revanche, si à l'étape 104, il est constaté que la somme des puissances consommées est inférieure à la puissance maximale disponible Pₘₐₓ, les moyens 30 sont commandés par l'étape 110 pour autoriser une consommation libre de puissance par l'organe fonctionnel, cette puissance étant toutefois limitée par une puissance maximale individuelle.

A l'étape 112, l'unité de traitement d'informations 34 détermine à partir de l'information fournie par le capteur d'intensité 38 la puissance Pₙ effectivement fournie depuis le poste de connexion considéré.

A l'étape 114, la puissance effectivement fournie Pₙ est envoyée sur le réseau par l'interface 33 à destination de l'ensemble des autres postes de connexion.

Tous les postes de connexion mettent en oeuvre le même algorithme.

Ainsi, avec un tel réseau, chaque poste de connexion connaît la puissance effectivement fournie depuis les autres postes de connexion et est propre à limiter la puissance qu'elle fournit à l'organe fonctionnel qui lui est connecté afin que la puissance maximale disponible Pₘₐₓ ne soit pas dépassée.

Ainsi, le réseau est dépourvu d'unité centrale de gestion de puissance de sorte que sa structure est très simple. Par ailleurs, le recours à la transmission par courant porteur évite des câblages lourds et complexes.

## Revendications

1. Réseau (10) de distribution de puissance électrique pour un véhicule comportant :
- des postes (20A, 20B, 20C, 20D) de connexion au réseau propre chacun à fournir de la puissance à un organe fonctionnel (22A, 22B, 22C, 22D) ;
- une ligne d'alimentation (16) sur laquelle chaque poste de connexion (20A, 20B, 20C, 20D) est connecté pour recevoir de la puissance et ;
- des moyens (30, 34, 36, 38) de limitation de la puissance fournie par les postes de connexion en fonction des puissances fournies par les différents postes de connexion, lesquels moyens de limitation comportent des moyens (38) de mesure de la puissance (Pᵢ) fournie depuis chaque poste de connexion (20A, 20B,20C,20D)
**caractérisé en ce que** chaque poste de connexion (20A) comporte :
- des moyens (33) d'émission, vers les autres postes de connexion (20B, 20C, 20D) du réseau, d'une information représentative de la puissance (Pᵢ) fournie depuis le poste de connexion (20A) ;
- des moyens (33) de réception depuis chaque autre poste du réseau, de l'information émise représentative de la puissance (Pᵢ) fournie par ce poste ; et
- des moyens (30, 36) de commande de la puissance pouvant être fournie par le poste de connexion (20A) en fonction des informations reçues de chaque autre poste de connexion et représentatives de la puissance (Pᵢ) fournie par chaque autre poste de connexion.

2. Réseau de distribution de puissance selon la revendication 1, **caractérisé en ce que** les moyens d'émission (33) et les moyens de réception (33) comportent des moyens de transmission d'informations par courant porteur qui sont reliés à la ligne d'alimentation (16) pour la transmission des informations représentatives de la puissance (Pᵢ) fournie sur la ligne d'alimentation (16).

3. Réseau de distribution de puissance selon l'une quelconque des revendications précédentes, **caractérisé en ce qu'**il comporte pour l'ensemble des postes de connexion (20A, 20B, 20C, 20D), un convertisseur de courant (14) commun dont la sortie est reliée à la ligne d'alimentation (16) et dont l'entrée est propre à être reliée à une source de puissance (13).

4. Réseau de distribution de puissance selon l'une quelconque des revendications précédentes, **caractérisé en ce qu'**il comporte une unité centrale (40) de fixation d'une puissance maximale disponible (Pₘₐₓ), laquelle unité (40) comporte des moyens (46) d'émission vers chaque poste de connexion (20A, 20B, 20C, 20D) d'une information représentative de la puissance maximale disponible (Pₘₐₓ), et **en ce que** les moyens (30) de commande de la puissance pouvant être fournie par chaque poste de connexion (20A, 20B, 20C, 20D) comportent des moyens pour commander la puissance pouvant être fournie par le poste de connexion en fonction de l'information représentative de la puissance maximale disponible (Pmax).

5. Réseau de distribution de puissance, **caractérisé en ce que** au moins certains des postes de connexion (20A, 20B, 20C, 20D) comportent des prises d'alimentation (22A, 22B) permettant la connexion d'un équipement électrique indépendant.

6. Procédé de distribution de puissance électrique par un réseau dans un véhicule comportant :
- des postes (20A, 20B, 20C, 20D) de connexion au réseau propre chacun à fournir de la puissance à un organe fonctionnel (22A, 22B, 22C, 22D) ;
- une ligne d'alimentation (16) sur laquelle chaque poste de connexion (20A, 20B, 20C, 20D) est connecté pour recevoir de la puissance ;
le procédé comportant :
- une mesure de la puissance (pᵢ) fournie depuis chaque poste de connexion (20A, 20B, 20C, 20D), et
- une limitation de la puissance fournie par les postes de connexion (20A, 20B, 20C, 20D) en fonction des puissances fournies par les différents postes de connexion,
**caractérisé en ce qu'**il comporte :
- une émission, depuis chaque poste de connexion (20A) vers les autres postes de connexion (20B, 20C, 20D) du réseau, d'une information représentative de la puissance (Pᵢ) fournie depuis le poste de connexion (20A) ;
- une réception depuis chaque autre poste du réseau (20B, 20C, 20D), de l'information émise représentative de la puissance (Pᵢ) fournie par chaque poste (20A) ; et
- une commande de la puissance pouvant être fournie par chaque poste de connexion (20A) en fonction des informations reçues de chaque autre poste (20B, 20C, 20D) et représentatives de la puissance (Pᵢ) fournie par chaque autre poste (20B, 20C, 20D).
